(19) Europäisches Patentamt / European Patent Office / Office européen des brevets

(11) **EP 4 390 298 B1**

(12) **FASCICULE DE BREVET EUROPEEN**

(45) Date de publication et mention de la délivrance du brevet:
**14.01.2026 Bulletin 2026/03**

(21) Numéro de dépôt: **23217165.2**

(22) Date de dépôt: **15.12.2023**

(51) Classification Internationale des Brevets (IPC):
**F41G 3/26** (2006.01)   **G01S 3/46** (2006.01)

(52) Classification Coopérative des Brevets (CPC):
**F41G 3/2605; G01S 3/46; G01S 5/04**

(54) **PROCÉDÉ ET DISPOSITIF DE DÉTERMINATION D'IMPACT DE TIR**

VERFAHREN UND VORRICHTUNG ZUR BESTIMMUNG DER SCHUSSWIRKUNG

METHOD AND DEVICE FOR DETERMINING THE IMPACT OF SHOOTING

(84) Etats contractants désignés:
AL AT BE BG CH CY CZ DE DK EE ES FI FR GB GR HR HU IE IS IT LI LT LU LV MC ME MK MT NL NO PL PT RO RS SE SI SK SM TR

(30) Priorité: **20.12.2022 FR 2213898**
**21.09.2023 FR 2309981**

(43) Date de publication de la demande:
**26.06.2024 Bulletin 2024/26**

(73) Titulaire: **THALES**
**92190 Meudon (FR)**

(72) Inventeur: **LAGUARDA, Joachim**
**33700 Mérignac (FR)**

(74) Mandataire: **Atout PI Laplace**
**Immeuble Up On**
**25 Boulevard Romain Rolland**
**CS 40072**
**75685 Paris Cedex 14 (FR)**

(56) Documents cités:
EP-A1- 2 456 009       CN-A- 112 969 139
US-A1- 2021 372 738

## Description

### Domaine de l'invention

La présente invention concerne le domaine de l'analyse de tir, notamment dans le domaine de l'entraînement, et concerne un dispositif et un procédé permettant la détermination d'impact de tir.

### Etat de la technique

Lors de l'entrainement au tir, notamment l'entrainement aux armes légères, dit entrainement « live », il est nécessaire de pouvoir rendre compte de manière fiable et en temps réel des tirs de projectiles qu'ils soient réels ou simulés. De telles exigences imposent certaines caractéristiques aux systèmes d'analyse envisagés. Ceux-ci doivent disposer d'une précision comparable à celle qui serait obtenue dans des situations réelles, tout en étant peu intrusif, c'est-à-dire de nécessiter le minimum d'équipements supplémentaires montés sur l'arme utilisée.

Parmi les méthodes pour simuler des impacts lors d'entrainement, il existe la technologie par illumination laser.

Le principe est similaire à celui d'un "Laser Ball" où il s'agit de simuler un combat au fusil, avec des fusils sans projectiles mais munis d'un émetteur laser qui simule les tirs de munitions.

Les participants, tireur(s) et cibles potentielles (fantassins, véhicules), sont équipés d'un certain nombre de capteurs (dont des capteurs intelligents, capteurs photosensibles déclenchant une alarme à chaque fois qu'ils sont touchés par un faisceau laser), de lasers (de détection, de simulation de tir) et autres dispositifs fonctionnels (batteries, unités de calculs et de communication). L'ensemble de ces moyens est réparti sur l'équipement d'entraînement, que ce soit au niveau de la tête (sur un casque), attaché sur la tenue devant et/ou dans le dos du participant, et installé sur le(s) armes(s).

Ces technologies laser pour l'entrainement au tir présentent des inconvénients multiples : atténuation du laser sur les grandes distances, impossibilité de tirer à travers des obstacles flous (par exemple du feuillage), nécessité d'équiper la cible avec suffisamment de capteurs photosensibles, qui de surcroit peuvent être occultés par des projections de boue entre autres.

Or, les exigences de fiabilité et de précision pour des mises en situation réelles, doivent faire face à plusieurs verrous pratiques opérationnels comme le poids et l'encombrement des équipements supplémentaires embarqués, les performances (précision et latence), l'autonomie du kit, mais aussi des verrous technologiques qui sont principalement la précision des données enregistrées et analysées, la fiabilité de l'analyse d'images, la puissance minimale de calcul embarqué dans le dispositif, le débit et la consommation de la liaison sans fil.

Les documents suivants proposent des approches pour déterminer un point d'impact de tirs sur une cible : US 2021/3727738 A1 ; EP 2 456 009 A1 ; CN 112 969 139 A. Cependant, ces solutions n'offrent pas une identification suffisamment précise de la cible touchée.

Il existe alors un besoin d'une solution appropriée qui permette de s'affranchir de ces limites.

La présente invention répond à ce besoin.

### Résumé de l'invention

Un but de la présente invention est de remédier aux inconvénients précités des approches connues, en proposant un procédé (et un dispositif associé) qui permet de déterminer un point d'impact sur une cible lors d'un tir en entrainement.

Avantageusement, la présente invention offre une solution dite hybride reposant sur l'analyse croisée d'informations radio et vidéo produites par trois types de capteurs.

Le principe de l'invention consiste en un enchainement de traitements comprenant :

- La détection du départ d'une munition d'une arme, par un module monté sur l'arme ;

- L'identification des participants (cibles potentielles) ainsi que leurs positions angulaires dans le repère ou référentiel de l'arme ayant effectué le tir, par un moyen de localisation ayant une précision limitée ;

- La détection de cibles par un module de traitement d'image approprié, à partir d'une image vue du canon de l'arme réalisée par un capteur optique ;

- La réalisation d'un calcul balistique précis qui prend en compte la cinétique de la munition (issue d'un calculateur balistique), la cinématique et l'éloignement de la cible (perçus par la caméra), ainsi que la cinématique de l'arme (telle que perçue par une centrale inertielle montée sur l'arme) ; et

- L'identification du participant qui croise la trajectoire balistique de la munition lors de l'impact, ainsi que la détermination de la partie du corps (pour un fantassin) ou de la zone (pour un objet) qui est touchée.

L'information d'attrition peut ensuite être remontée à la cible et au système de suivi d'entrainement par un canal radio. Cette information permet de simuler un tir sur humain ou sur véhicule, de déterminer l'attrition due à la position de l'impact de la munition et d'appliquer cette attrition sur le participant concerné, en l'avertissant qu'il est touché ou mort, en désactivant son arme, ...

Pour obtenir les résultats recherchés, il est proposé un dispositif de détermination de point d'impact sur une cible lors d'un tir en entrainement, tel que défini dans le jeu de revendications joint.

La présente invention adresse aussi une arme équipée du dispositif de l'invention.

Un autre objet de l'invention est un procédé de détermination de point d'impact sur une cible lors d'un tir en entrainement, tel que défini dans la revendication 9 et 10.

L'invention dans un autre aspect couvre un produit programme d'ordinateur comprenant des instructions de code non transitoire permettant d'effectuer les étapes du procédé tel que revendiqué lorsque ledit programme est exécuté sur un ordinateur.

**Description des figures**

Différents aspects et avantages de l'invention vont apparaitre en appui de la description d'un mode préféré d'implémentation de l'invention mais non limitatif, avec référence aux figures ci-dessous :

La figure 1 illustre l'arrivée d'une onde plane sur un couple d'antennes.

La figure 2 illustre la détermination du positionnement d'un objet par triangulation.

La figure 3 est un graphique pour illustrer la précision d'une mesure d'angle d'arrivée d'une onde.

La figure 4 illustre en 2D la détermination de la position angulaire de cibles dans le référentiel d'une arme.

La figure 5 illustre un exemple en 3D de la détermination d'une position angulaire de cibles selon un mode de réalisation de l'invention.

La figure 6 illustre un exemple de détection et de localisation de cibles obtenu par la mise en œuvre du dispositif de l'invention.

La figure 7 illustre un procédé de détermination d'impact de tir selon l'invention.

**Description détaillée de l'invention**

L'invention permet de déterminer un point d'impact sur une cible, notamment lors d'un tir en entrainement avec une arme légère. Pour déterminer un impact produit par un tir, le procédé de l'invention comprend plusieurs traitements de données combinés qui permettent d'identifier un participant qui a été touché par une munition, et permettent de déterminer la zone d'impact du tir sur le participant (humain ou objet).

Le dispositif de l'invention dispose ainsi d'une combinaison de moyens pour permettre la détermination d'un impact de tir, chaque moyen pris isolément ne permettant pas de produire la précision requise pour le domaine d'application.

Les moyens de localisation existants n'ont pas une précision suffisante pour permettre une désignation sûre d'une cible en étant utilisés seuls. Aussi, la présente invention permet de combiner les informations issues de plusieurs moyens d'acquisition de données radio et vidéo pour obtenir un résultat précis de la détermination de l'impact d'un tir.

Différents modes de réalisation de la fonction de radio localisation peuvent être implémentés afin de réaliser cette partie d'acquisition de données du dispositif de l'invention.

Ainsi, dans un mode de réalisation, il peut être mis en œuvre une fonction qui permet la localisation de tireurs et de cibles dans un repère global, et une fonction qui permet un calcul de la position des cibles dans le repère du tireur.

Dans le cas d'une localisation en extérieur, un mode de réalisation peut être l'utilisation d'un système de GNSS (« Global Navigation Satellite System » en anglais).

Avec une combinaison de systèmes satellites multi constellation, tels que par exemple les systèmes 'BeiDou', 'Galileo', 'GLONASS' et 'GPS', et en considérant la capacité à utiliser des flux de correction différentielle (le dispositif 'GPS RTK' - « Real Time Kinematic » en anglais - permet de transmettre en temps réel les données de corrections d'une base d'observation aux GPS mobiles), il est possible d'atteindre une précision de localisation inférieure au mètre.

Cependant cette technologie n'est pas utilisable à l'intérieur de bâtiments ou dans des zones de brouillage où les signaux satellites ne sont pas disponibles.

Dans un mode de réalisation, il peut être mis en œuvre une technologie radio de localisation ou (RTLS) pour « Real Time Locating System » en anglais.

L'état de l'art en localisation intérieure par radio permet d'atteindre des précisions en dessous du mètre voir même autour de 10 centimètres dans des conditions optimales.

Dans un mode de réalisation, la technologie radio de localisation peut être une technologie bande ultra large ou (UWB) pour « Ultra Wide Band » en anglais, qui est basée sur une méthode du temps de vol ou (ToF) pour « Time of Flight » en anglais.

La méthode de temps de vol (ToF) permet de mesurer la distance entre deux émetteurs-récepteurs radio, en multipliant le ToF du signal par la vitesse de la lumière. Ces temps de vols peuvent être calculés soit à partir d'une communication bidirectionnelle entre des ancres fixes et des modules à géo-localiser, on parle de « Two Way Ranging » ou (TWR), ou être calculés à partir d'une communication unidirectionnelle entre des ancres fixes et des modules à géo-localiser, et on parle de « Time Difference of Arrival » ou (TDoA).

Dans un mode de réalisation, la technologie radio de localisation peut être une technologie dite par « Angle d'arrivée » ou (AOA) pour « Angle Of Arrival » en anglais, notamment une technologie par Angle d'Arrivée pour Bluetooth 5.1.

La méthode AOA utilise la différence de phase de réception d'un signal sur un réseau d'ancres comportant plusieurs antennes, afin de calculer la position angulaire des balises par rapport aux ancres, et en déduire la position géographique des balises par triangulation.

Cependant ces solutions utilisées seules, nécessiteraient de déployer une infrastructure lourde. En effet, des « ancres » doivent être installées à espaces réguliers sur toute la zone, et elles nécessiteraient un déploiement non trivial : une connectivité réseau et énergétique, une mesure précise de leur géolocalisation, un système de synchronisation d'horloge pour les techniques de TDoA, ...

De plus, suivant la technologie utilisée, des restrictions sur le nombre d'éléments à localiser et la fréquence de rafraîchissement pourraient s'appliquer.

Aussi, l'usage seul d'une technologie radio de localisation ne peut garantir une précision requise pour la détermination d'impact de tirs.

Une autre technologie de positionnement est l'odométrie.

L'odométrie est une technique permettant d'estimer la position d'un objet en mouvement par l'observation itérative de ce mouvement par des « capteurs ».

Le positionnement par odométrie peut faire appel à différent types de capteurs.

Dans le cas d'un véhicule à roue, l'observation de la rotation des roues permet de reconstituer le mouvement global du mobile.

L'odométrie inertielle, fait appels à une centrale de mesure pour calculer itérativement la position du mobile par intégration des données inertielles de senseurs tels que des accéléromètres, gyroscopes, compas magnétiques et baromètres. Ces données sont en général fusionnées par un filtre (Kalman, Madgwick, complémentaire, ...).

L'odométrie visuelle permet d'estimer le déplacement d'un mobile équipé d'une caméra calibrée en calculant itérativement le déplacement de la caméra entre chaque image successive, par des méthodes d'analyse d'images et de géométrie projective.

D'autres capteurs peuvent être utilisés pour du positionnement par odométrie.

Toutes ces méthodes calculent la position itérativement, et sont sujettes à une dérive plus ou moins grande dû à la précision limitée des calculs et à l'accumulation d'erreurs de mesures (comme le bruit de mesure).

Pour les robustifier, il est possible de les hybrider entre elles : utilisation d'odométrie visuelle et d'odométrie inertielle par exemple.

Une autre méthode classique pour positionner des trajectoires dans un repère géographique global, est l'utilisation d'ancres spatiales positionnées soit au début du parcours (avec une initialisation de la position), soit tout le long du parcours (avec un recalage pour limiter la dérive). Ces ancres dont la position est connue peuvent être des portiques, des marqueurs visuels dans le cas de l'odométrie visuelle, etc.

Dans un autre mode de réalisation de l'invention, les moyens de localisation consistent en une fonction permettant de localiser directement des cibles dans le repère ou référentiel du tireur.

Comme expliqué précédemment, les technologies d'AOA sont classiquement utilisées pour effectuer la géolocalisation de balise par rapport à un réseau étendu d'antennes.

Dans le contexte de l'invention, les inventeurs proposent d'utiliser cette technologie d'AOA pour répondre au besoin de valider l'alignement de cibles directement dans le référentiel de l'arme.

Dans un mode de réalisation, la technologie AOA Bluetooth 5.1 est utilisée pour déterminer un positionnement en intérieur.

La méthode par angle d'arrivée (AOA) consiste en un échange de paquets de données entre un appareil émetteur appelé balise ou "beacon" en anglais, et un appareil récepteur appelé localisateur ou "locator" en anglais.

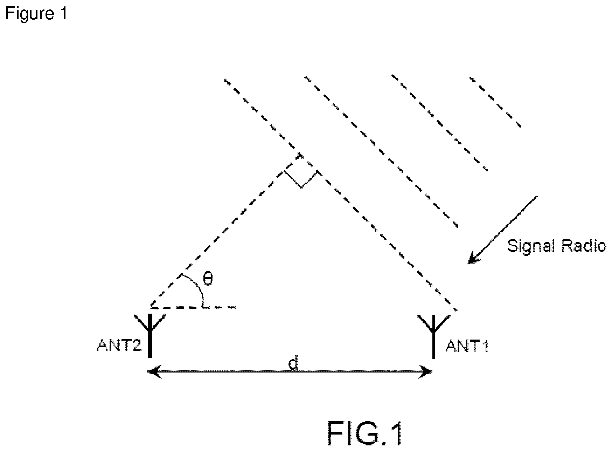

Ce dernier appareil possède plusieurs antennes qui sont séparées d'une distance connue, comme illustré sur la figure 1 (source : « Bluetooth Special Interest Group ») qui montre l'arrivée d'une onde plane (Signal Radio) sur un couple d'antennes (ANT1, ANT2) séparées d'un distance « d ».

Le récepteur possède plusieurs antennes, en général répartie de façon concentrique pour pouvoir détecter les signaux de la balise à 360°.

Un calcul trigonométrique permet de déterminer l'angle où se situe la balise par rapport à un couple de 2 antennes du récepteur avec la formule suivante :

$$\theta = \arccos((\psi\lambda)/(2\pi d))$$

avec '$\theta$' l'angle d'arrivée en radian permettant de situer où se trouve la balise par rapport au récepteur ; '$\psi$' la différence de phase entre les ondes reçues par les deux antennes du récepteur ; '$\lambda$' la longueur d'onde du signal reçu, soit 0,125 m avec la fréquence de 2,4 GHz du Bluetooth ; 'd' la distance entre les 2 antennes.

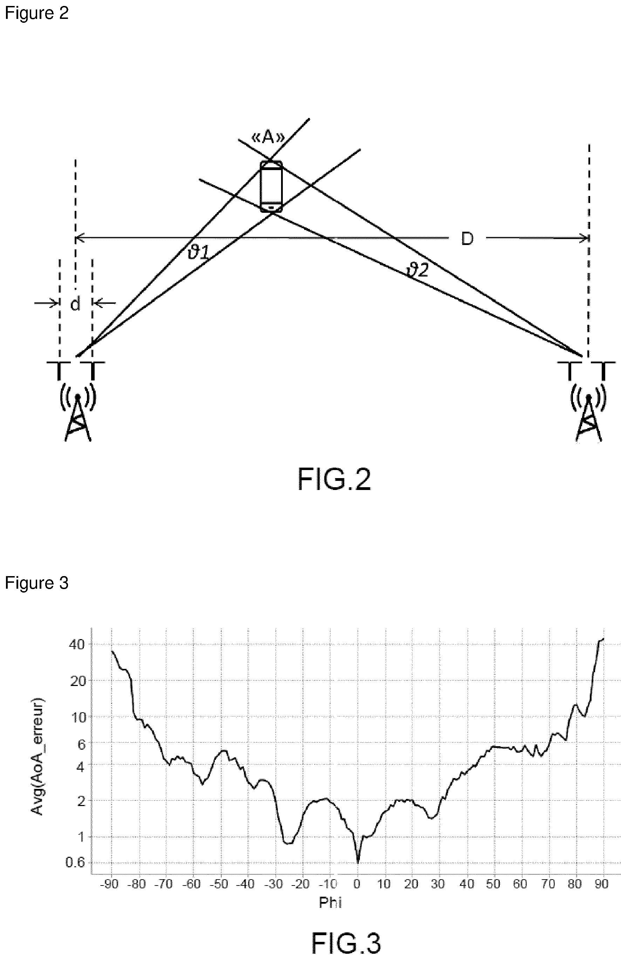

Le système de positionnement utilise ensuite une collection de localisateurs (chacun avec plusieurs antennes), pour localiser les balises par triangulation, selon un calcul connu et illustré sur la figure 2 (source : « Texas Instrument forum ») avec deux localisateurs séparés d'une distance 'D'.

Grâce à la précision de mesure de l'angle θ, il est possible de faire une localisation en intérieur avec une précision inférieure au mètre.

Il est à noter que la précision de mesure peut être affectée par le « rebond » ou l'occultation des ondes radio par des surfaces métalliques.

Dans un autre mode de réalisation de la fonctionnalité de calcul direct des positions angulaires dans le repère de l'arme, la technologie UWB par AOA est utilisée pour déterminer un positionnement en intérieur. La technologie UWB (pour « Ultra Wide Band » en anglais) permet de faire de la localisation par détection d'angle d'arrivée.

Les inventeurs ont déterminé que dans le cas du Bluetooth, l'analyse de la technologie AOA montre que dans le cas simple de deux antennes colinéaires, la précision de mesure de l'angle θ est maximale (i.e. < 1°) dans l'axe perpendiculaire aux deux antennes (Phi = 0). Le diagramme de la figure 3 (source : « Texas Instrument Designs: TIDA-01632) illustre cet aspect.

Etant donné que la zone intéressant la mesure de la localisation est comprise dans un angle « faible », i.e. quelques degrés en face du canon de l'arme, la répartition de l'erreur de mesure (relevée sur la courbe de la figure 3) montre que le mode de réalisation selon la technologie AOA Bluetooth est particulièrement avantageux.

De plus dans le cas de l'alignement de cibles, l'hypothèse peut être faite que l'espace entre le tireur et sa cible est vide d'obstacles, et ainsi la précision de mesure n'est pas affectée par des interférences avec des structures métalliques se trouvant sur le chemin. La portée d'un signal Bluetooth ou BLE (« Bluetooth Low Energy » en anglais) doit alors être maximum (+ de 100 m).

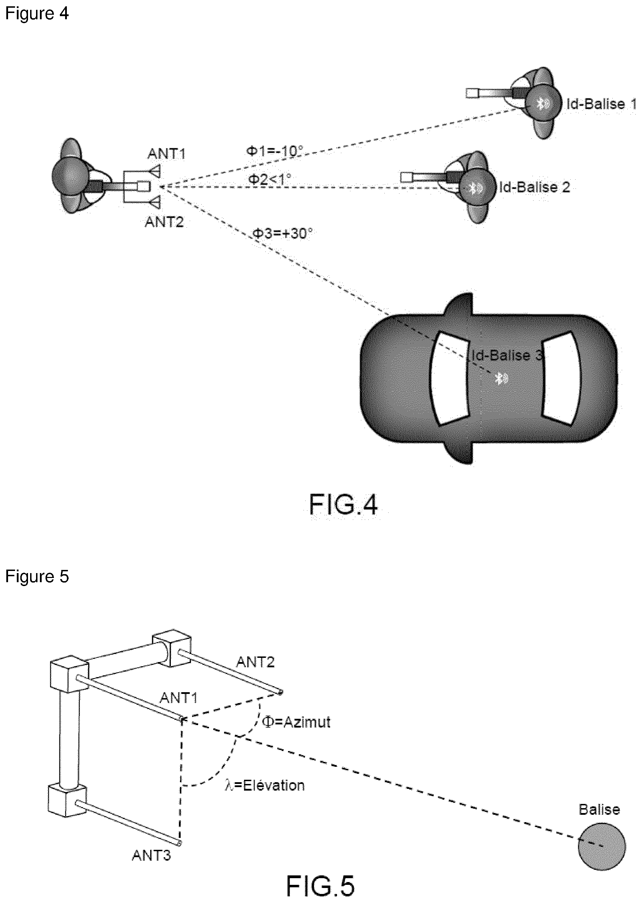

La figure 4 illustre un exemple en 3D de la détermination d'une position angulaire de cibles selon un mode de réalisation de l'invention. Sur cet exemple simplifié mais non limitatif, un tireur est équipé d'une arme qui comporte un moyen de localisation radio de cibles ayant deux antennes (ANT1, ANT2), et trois participants sont des cibles potentielles (deux humains et un véhicule).

Après une identification des participants - Id-Balise1, Id-Balise2, Id-Balise3 -, l'application de la technologie de positionnement AOA Bluetooth, permet de générer des informations de positionnement relatives à chaque cible :

- une balise identifiée Id-Balise1 se trouve à un angle $\theta_1$ de -10° par rapport à l'axe du canon de l'arme ;

- une balise identifiée Id-Balise2 se trouve à un angle $\theta_2$ de 0° par rapport à l'axe du canon de l'arme ;

- une balise identifiée Id-Balise3 se trouve à un angle $\theta_3$ de +30° par rapport à l'axe du canon de l'arme.

Ainsi, les technologies de type AOA sont particulièrement adaptées à la réalisation de la fonction de positionnement de cibles. Elles offrent un moyen de radio localisation ayant une précision limitée qui permet de connaitre l'identifiant des participants ainsi que leurs positions angulaires dans le repère de l'arme ayant effectué le tir.

Sachant que la technologie AOA comporte les mêmes propriétés de précision axiale en UWB, et sachant que la fréquence radio plus élevée de l'UWB (i.e. de 3.1 à 10.6 GHz) permet une portée inférieure qui n'est pas perturbée par le corps humain, l'utilisation de la technologie AOA UWB est alors particulièrement avantageuse dans le cas d'un engagement à courte distance (<25 m) en milieu urbain ou en intérieur.

L'utilisation de ces technologies dans le contexte d'application de l'invention n'est pas ordinaire, ni à une portée immédiate pour un homme du métier. En effet, il est à remarquer que l'utilisation de la technologie AOA telle que proposée dans l'invention pour réaliser la localisation de cibles potentielles, est inverse du schéma classique de l'utilisation de cette technologie.

Dans le schéma d'utilisation connu, une constellation d'antennes (appelées ancres) sont positionnées de façon statique et connue sur l'infrastructure afin de trianguler la position des balises dans un repère global.

Dans le schéma d'utilisation de la présente invention, les antennes (i.e. les ancres) sont positionnées sur le canon de l'arme du tireur. Elles ne sont pas statiques et sont au contraire en mouvement. La position des balises est alors recherchée dans le repère du canon.

Dans une variante de réalisation, les moyens de localisation équipant l'arme du tireur disposent de trois antennes (ANT1, ANT2, ANT3) définissant un repère ortho-normal tel qu'illustré sur la figure 5. La détermination de la localisation des cibles (i.e. la localisation des balises portées par les cibles), est effectuée de manière similaire qu'avec deux antennes, mais en prenant en compte successivement deux couples d'antennes perpendiculaires, (ANT1-ANT2) et (ANT1-ANT3). Ceci permet de calculer deux angles d'alignement : un azimut 'Φ' et une élévation 'λ'.

Dans cette variante de réalisation, la fonction de radio localisation fournit une information 3D (azimut et élévation des balises dans le repère de l'arme). L'angle d'élévation peut être utilisé comme critère supplémentaire ultérieurement pour identifier une cible dans une image.

Ainsi, il est fait une identification de cibles par leurs positions angulaires approchées.

Le procédé de l'invention permet de plus de réaliser un calcul balistique précis de la trajectoire de la munition. Le calcul balistique prend en compte la cinétique de la munition (issue d'un calculateur balistique), la cinématique et l'éloignement de la cible (perçus par la caméra) ainsi que la cinématique de l'arme (telle que perçue par une centrale inertielle montée sur l'arme).

La prise en compte de l'éloignement de la cible est faite par un capteur optique équipant l'arme.

Dans un mode de réalisation, le dispositif optique est composé d'une caméra co-localisée au canon de l'arme, et qui permet lors du déclenchement d'un tir (simulé ou réel) de prendre une image vue du canon.

Le dispositif optique est de plus configuré pour annoter le type des cibles vues, leurs *« squelettes »,* pour calculer pour chaque cible la distance et l'orientation par rapport à l'axe de la caméra, et construire dans l'image un point d'impact d'une munition donnée en réalisant un calcul balistique.

Ainsi, la combinaison des informations obtenues par la détection de la position relative de balises, et des informations liées au calcul balistique précis de la trajectoire de la munition, permet de produire des informations supplémentaires quant à l'identification du participant qui croise la trajectoire balistique de la munition lors de l'impact, avec la détermination de la partie touchée.

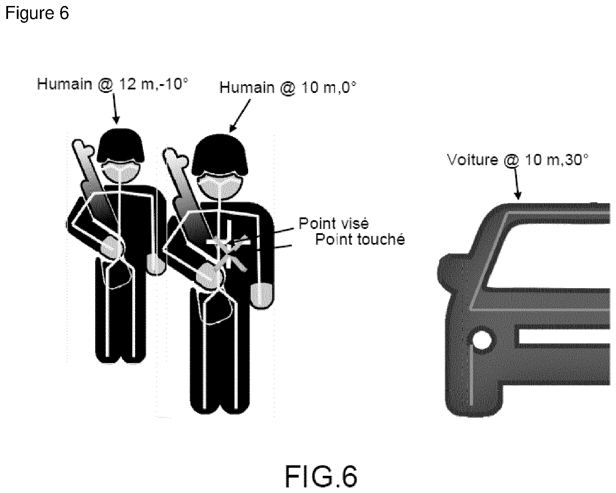

En reprenant le même exemple que celui de la figure 4, les informations produites sont illustrées sur la figure 6 et consistent à indiquer que :

- Un humain se trouve à 12 m de distance, à -10° par rapport à l'axe du canon.

- Un humain se trouve à 10 m de distance, à 0° par rapport à l'axe du canon, et il est touché à la poitrine (point touché).

- Une voiture se trouve à 10 m de distance, à +30° par rapport à l'axe du canon.

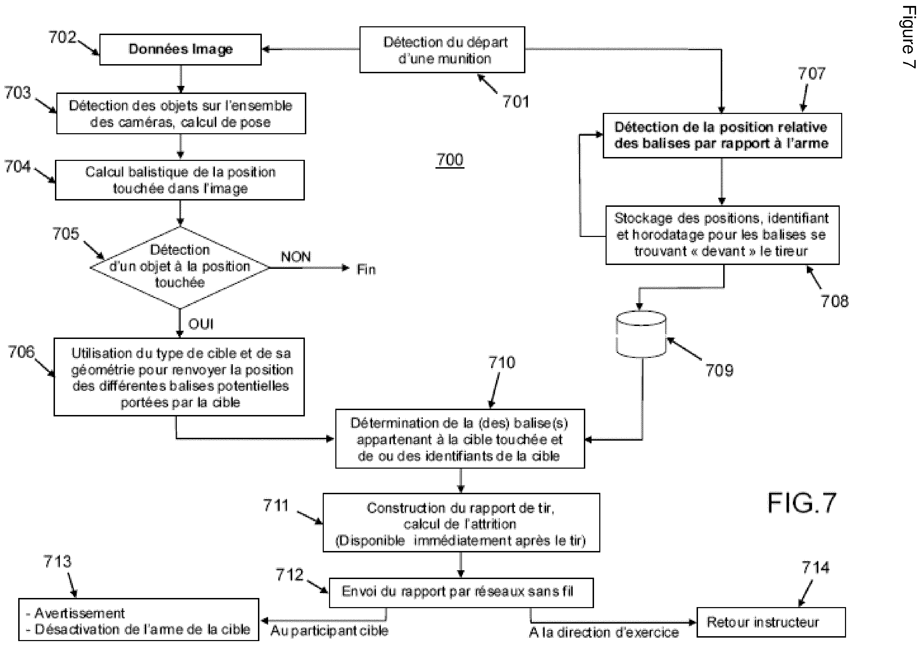

Des étapes du procédé de détermination d'impact de tir selon un mode de réalisation de l'invention sont décrites en référence à la figure 7.

Le procédé 700 comprend généralement des étapes (707 à 709) opérées par des premiers moyens de calcul basés sur des données radio de localisation, des étapes (702 à 706) opérées par des seconds moyens de calcul basés sur des données optiques de localisation, et des étapes (710 à 714) opérées par des moyens de détermination d'impact pour combiner les informations calculées par les premiers moyens de calcul et les informations calculées par les seconds moyens de calcul et pour déterminer la cible touchée par la munition et le point d'impact.

Ainsi, après une étape initiale 701, opérée par des moyens de détection de tir pour détecter le moment du départ d'une munition de l'arme (début du tir), le procédé, concernant des étapes relatives à l'acquisition et l'exploitation de données optiques. Une étape 702 permet de produire une image vue du canon de l'arme.

L'image peut être produite à partir d'une ou plusieurs caméras équipant l'arme.

Dans un mode de réalisation, le dispositif optique est conforme au, ou, est basé sur, le dispositif décrit dans la demande de brevet FR3087528 de la Demanderesse.

Dans une étape suivante 703, le procédé permet à partir d'un traitement approprié d'analyser l'image produite pour détecter des objets présents sur l'image, effectuer des calculs de pose.

Dans une étape suivante 704, le procédé permet d'effectuer un calcul balistique précis de la trajectoire, qui prend en compte la cinétique de la munition (issue d'un calculateur balistique), la cinématique et l'éloignement de la cible (perçus par la caméra) ainsi que la cinématique de l'arme (telle que perçue par une centrale inertielle montée sur l'arme), afin de déterminer une position touchée dans l'image.

Dans une étape suivante 705, le procédé permet de déterminer si un objet de l'image est présent à la position touchée dans l'image.

Si un objet est détecté à la position touchée, dans une étape suivante 706, le procédé permet d'utiliser les informations relatives à l'objet (son type, sa géométrie) pour identifier la position de la ou des balises portées par l'objet touché.

En reprenant l'exemple de la figure 6, le procédé permet de générer les informations suivantes : un humain se trouve à 12 m de distance ; un humain se trouve à 10m de distance et est touché ; une voiture se trouve à 10 m de distance.

Revenant à l'étape initiale 701 de détection du moment du départ d'une munition de l'arme, le procédé, concernant les étapes relatives aux données de radio localisation, permet dans une étape 707 de détecter dans le référentiel de l'arme, par un moyen de localisation ayant une précision limitée, la position relative de balises situées devant le tireur. Cette étape permet une identification des participants ainsi que la détermination de leurs positions angulaires par la position des balises.

Dans une étape suivante (708, 709) le procédé permet d'horodater et stocker les positions angulaires et les identifiants des participants.

En reprenant l'exemple de la figure 4, le procédé permet de stocker les informations suivantes : (Id-Balise1 ; $\theta_1$=-10°); (Id-Balise2 ; $\theta_2$=0°) ; (Id-Balise3 ; $\theta_3$=+30°).

Une fois les deux types de calculs radio et vidéo effectués, le procédé poursuit par une étape 710 permettant de croiser les différentes informations produites afin d'identifier le participant qui croise la trajectoire balistique de la munition lors de l'impact, et de déterminer la zone touchée (partie du corps pour un humain ou zone pour un autre objet).

Ainsi, selon l'exemple de la figure 6, la combinaison de l'ensemble des informations obtenues par les deux traitements de données, permet de déterminer que l'humain placé à 10 mètres et situé à 0° par rapport à l'axe du canon, a été touché à la poitrine.

Le procédé permet ensuite 711 de construire un rapport de tir calculer l'attrition due à la position de l'impact de la munition.

Le procédé peut poursuivre par une étape 712 permettant d'envoyer le rapport de tir, d'une part au participant qui a été touché 713, et d'autre part à l'instructeur de l'exercice de tir 714.

Dans une variante de réalisation, afin d'améliorer la précision du système et palier aux indéterminations, il est possible d'étendre la solution en positionnant plusieurs balises sur les participants, à des endroits connus (tête, épaules, genoux, ...). Les angles de position remontés sont alors multiples par participant et le système effectue plusieurs mises en correspondance d'angles pour localiser de façon certaine les participants dans l'image.

Une variante de réalisation consiste à mettre en œuvre plusieurs types de moyens de localisation, qui peuvent fonctionner en parallèle afin de fournir une solution plus robuste.

Dans un mode de réalisation, une solution d'odométrie visuelle et inertielle couplée à un positionnement radio peut permettre au système d'être immunisé à une perturbation radio ou à un fumigène bloquant la vue si ces perturbations ne se déclenchent pas au même moment.

Le dispositif de l'invention présente est avantageux dans les cas où une cible est complètement cachée (fumigène, végétation dense, ...). En effet, la fonction pour le « dispositif optique » est alors inopérante. Cependant, il devient possible de mettre en œuvre le procédé de l'invention en simulant le tir de façon statistique. Connaissant la position approchée des cibles dans le repère de l'arme, et en considérant que le tireur ne peut apercevoir les cibles et qu'il effectue son tir « au juger », il est complètement valide de calculer une probabilité statistique de toucher.

**Revendications**

**1.** Dispositif de détermination de point d'impact sur une cible lors d'un tir en entrainement, le dispositif comprenant :

  - des moyens de détection de tir (701) configurés pour déterminer un moment de départ d'une munition d'une arme ;
  - des premiers moyens de calcul (707, 708, 709) comprenant au moins deux antennes positionnées sur le canon de l'arme, configurés pour déterminer des informations de positions angulaires de cibles situées devant l'arme, le calcul des positions angulaires de cibles étant fait dans le référentiel du canon de l'arme par la mise en œuvre d'une technologie radio de localisation de balises dite par angle d'arrivée, lesdites balises étant portées par la cible ;
  - des seconds moyens de calcul (702, 703, 704, 705, 706) configurés pour déterminer si au moins un objet présent sur une image vue de l'arme est touché par la munition, et si oui caractériser ledit au moins un objet par des informations relatives au type d'objet et à sa position ;
  - des moyens de détermination d'impact (710) configurés pour combiner les informations calculées par les premiers moyens de calcul et les informations calculées par les seconds moyens de calcul et pour identifier la cible touchée par la munition et déterminer le point d'impact sur la cible.

**2.** Le dispositif selon la revendication 1 dans lequel la technologie dite par angle d'arrivée dans le référentiel du canon de l'arme est notamment une technologie par angle d'arrivée pour Bluetooth 5.1 ou bande ultra large.

**3.** Le dispositif selon l'une quelconque des revendications précédentes dans lequel les premiers moyens de calcul sont configurés pour mettre en œuvre une technologie radio bande ultra large, déployée dans l'infrastructure, basée sur une méthode de calcul de distance dite de temps de vol ou de calcul d'angle d'arrivée.

**4.** Le dispositif selon l'une quelconque des revendications précédentes dans lequel les premiers moyens de calcul sont configurés pour mettre en œuvre une technologie de positionnement par odométrie.

**5.** Le dispositif selon l'une quelconque des revendications précédentes dans lequel les seconds moyens de calcul sont configurés pour prendre avec au moins une caméra montée sur l'arme, une image vue du canon au moment du départ de la munition, et pour annoter pour chaque objet détecté sur l'image des informations quant à son type, sa distance et son orientation par rapport à l'axe de la caméra.

**6.** Le dispositif selon la revendication précédente dans lequel les seconds moyens de calcul sont configurés pour réaliser un calcul balistique de la trajectoire de la munition à partir de l'analyse de l'image et construire un point d'impact de la munition dans l'image.

**7.** Le dispositif selon l'une quelconque des revendications précédentes comprenant de plus des moyens pour générer un rapport de tir et calculer l'attrition due à la position du point d'impact de la munition sur une cible.

**8.** Arme équipée d'un dispositif selon l'une quelconque des revendications précédentes.

**9.** Procédé (700) de détermination de point d'impact sur une cible lors d'un tir en entrainement, le procédé comprenant des étapes consistant à :

  - déterminer (701) un moment de départ d'une munition d'une arme ;
  - déterminer (707, 708, 709) par des premiers moyens de calcul comprenant au moins deux antennes positionnées sur le canon de l'arme, des informations de positions angulaires de cibles situées devant l'arme, le calcul des positions angulaires de cibles étant fait dans le référentiel du canon de l'arme par la mise en œuvre d'une technologie radio de localisation de balises dite par angle d'arrivée, lesdites balises étant portées par la cible ;

- déterminer (702, 703, 704, 705, 706) si au moins un objet présent sur une image vue de l'arme est touché par la munition, et si oui caractériser ledit au moins un objet par des informations relatives au type d'objet et à sa position ; et

- combiner (710) les informations de positions angulaires de cibles et les informations relatives au type d'objet et à sa position, pour identifier la cible touchée par la munition et déterminer le point d'impact sur la cible.

10. Le procédé selon la revendication précédente comprenant de plus une étape pour générer (711) un rapport de tir et calculer l'attrition due à la position du point d'impact de la munition sur la cible.


**Patentansprüche**

1. Vorrichtung zur Bestimmung eines Einschusspunkts auf einem Ziel bei einem Übungsschuss, wobei die Vorrichtung umfasst:

    - Schusserfassungsmittel (701), die ausgelegt sind, um einen Zeitpunkt des Abgangs einer Munition von einer Waffe zu bestimmen;
    - erste Berechnungsmittel (707, 708, 709), die mindestens zwei Antennen umfassen, die auf dem Gewehrlauf der Waffe positioniert sind und ausgelegt sind, um Winkelpositionsinformationen von Zielen zu bestimmen, die sich vor der Waffe befinden, wobei die Berechnung der Winkelpositionen von Zielen in einem Bezugssystem des Gewehrlaufs der Waffe durch den Einsatz einer Funktechnologie zur Lokalisierung von Baken erfolgt, die als Ankunftswinkeltechnologie bezeichnet wird, wobei die Baken von dem Ziel getragen werden;
    - zweite Berechnungsmittel (702, 703, 704, 705, 706), die ausgelegt sind, um zu bestimmen, ob mindestens ein Objekt, das auf einem Bild vorhanden ist, das von der Waffe gesichtet wurde, von der Munition getroffen wurde, und falls ja, das mindestens eine Objekt über Informationen in Bezug auf die Art des Objekts und seine Position zu beschreiben;
    - Einschussbestimmungsmittel (710), die ausgelegt sind, um die von den ersten Berechnungsmitteln berechneten Informationen und die von den zweiten Berechnungsmitteln berechneten Informationen zu kombinieren und um das von der Munition getroffene Ziel zu identifizieren und den Einschusspunkt auf dem Ziel zu bestimmen.

2. Vorrichtung nach Anspruch 1, wobei die als Ankunftswinkeltechnologie bezeichnete Technologie im Bezugssystem des Gewehrlaufs der Waffe insbesondere eine Ankunftswinkeltechnologie für Bluetooth 5.1 oder Ultrabreitband ist.

3. Vorrichtung nach einem der vorstehenden Ansprüche, wobei die ersten Berechnungsmittel ausgelegt sind, um eine Ultrabreitband-Funktechnologie, die in der Infrastruktur verwendet wird, auf Grundlage eines Entfernungsberechnungsverfahrens, das als Flugzeitverfahren bezeichnet wird, oder eines Ankunftswinkelberechnungsverfahrens einzusetzen.

4. Vorrichtung nach einem der vorstehenden Ansprüche, wobei die ersten Berechnungsmittel ausgelegt sind, um eine Positionierungstechnologie mittels Odometrie einzusetzen.

5. Vorrichtung nach einem der vorstehenden Ansprüche, wobei die zweiten Berechnungsmittel ausgelegt sind, um mit mindestens einer Kamera, die an der Waffe angebracht ist, ein von dem Gewehrlauf zum Zeitpunkt des Abgangs der Munition gesichtetes Bild aufzunehmen, und um für jedes auf dem Bild erfasste Objekt Informationen bezüglich seiner Art, seiner Entfernung und seiner Ausrichtung in Bezug auf die Achse der Kamera anzumerken.

6. Vorrichtung nach einem vorstehenden Anspruch, wobei die zweiten Berechnungsmittel ausgelegt sind, um eine ballistische Berechnung der Flugbahn der Munition ausgehend von der Analyse des Bildes durchzuführen und einen Einschusspunkt der Munition im Bild auszuarbeiten.

7. Vorrichtung nach einem der vorstehenden Ansprüche, weiter umfassend Mittel, um einen Schussbericht zu erstellen und die Abnutzung aufgrund der Position des Einschusspunkts der Munition auf dem Ziel zu berechnen.

8. Waffe, die mit einer Vorrichtung nach einem der vorstehenden Ansprüche ausgestattet ist.

9. Verfahren (700) zur Bestimmung eines Einschusspunkts auf einem Ziel bei einem Übungsschuss, wobei das Verfahren Schritte umfasst, die aus Folgendem bestehen:

    - Bestimmen (701) eines Zeitpunkts des Abgangs einer Munition von einer Waffe;
    - Bestimmen (707, 708, 709), über erste Berechnungsmittel, die mindestens zwei Antennen umfassen, die auf dem Gewehrlauf der Waffe positioniert sind, von Winkelpositionsinformationen von Zielen, die sich vor der Waffe befinden, wobei die Berechnung der Winkelpositionen von Zielen in einem Bezugssystem des Gewehrlaufs der Waffe durch den Einsatz einer Funktechnologie zur Lokalisierung von Baken erfolgt, die als Ankunftswinkeltechnologie bezeichnet wird, wobei diese Baken von dem Ziel getragen werden;

- Bestimmen (702, 703, 704, 705, 706), ob mindestens ein Objekt, das auf einem Bild vorhanden ist, das von der Waffe gesichtet wurde, von der Munition getroffen wurde, und falls ja, Beschreiben des mindestens einen Objekts über Informationen in Bezug auf die Art des Objekts und seine Position; und

- Kombinieren (710) der Winkelpositionsinformationen von Zielen und der Informationen in Bezug auf die Art des Objekts und seine Position, um das von der Munition getroffene Objekt zu identifizieren, und Bestimmen des Einschusspunkts auf dem Ziel.

**10.** Verfahren nach einem vorstehenden Anspruch, weiter umfassend einen Schritt zum Erstellen (711) eines Schussberichts und Berechnen der Abnutzung aufgrund der Position des Einschusspunkts der Munition auf dem Ziel.

**Claims**

**1.** Device for determining the point of impact on a target during practice shooting, the device comprising:

- means for detecting shooting (701) configured to determine a time of departure of ammunition from a weapon;
- first means for calculating (707, 708, 709) comprising at least two antennas positioned on the barrel of the weapon, configured to determine angular position information of targets located in front of the weapon, the calculation of the angular positions of targets being performed in the reference frame of the barrel of the weapon by the implementation of a beacon locator radio technology referred to as angle of arrival, said beacons being worn by the target;
- second means for calculating (702, 703, 704, 705, 706) configured to determine if at least one object present on an image viewed from the weapon is hit by the ammunition, and if yes characterize said at least one object by information concerning the type of object and its position;
- means for determining an impact (710) configured to combine the information calculated by the first means for calculating and the information calculated by the second means for calculating to identify the target hit by the ammunition and determine the point of impact on the target.

**2.** The device according to claim 1 wherein the so called angle-of-arrival technology in the reference frame of the barrel of the weapon is in particular an angle-of-arrival technology for Bluetooth 5.1 or ultra-wide band.

**3.** The device according to any of the preceding claims wherein the first means for calculating are configured to implement an ultra-wide band radio technology, deployed in the infrastructure, based on a method for calculating distance referred to as time of flight or angle-of-arrival calculation.

**4.** The device according to any of the preceding claims wherein the first means for calculating are configured to implement a positioning technology by odometry.

**5.** The device according to any of the preceding claims wherein the second means for calculating are configured to take with at least one camera mounted on the weapon, an image viewed by the barrel at the time of the departure of the ammunition, and to annotate for each object detected on the image information as to its type, its distance and its orientation with respect to the axis of the camera.

**6.** The device according to the preceding claim wherein the second means of calculating are configured to perform a ballistic calculation of the trajectory of the ammunition using the analysis of the image and construct a point of impact of the ammunition in the image.

**7.** The device according to any of the preceding claims further comprising means for generating a shooting report and calculating the attrition due to the position of the point of impact of the ammunition on a target.

**8.** Weapon equipped with a device according to any of the preceding claims.

**9.** Method (700) for determining the point of impact on a target during practice shooting, the method comprising steps consisting of:

- determining (701) a time of departure of ammunition from a weapon;
- determining (707, 708, 709) by first means for calculating comprising at least two antennas positioned on the barrel of the weapon, information on the angular positions of targets located in front of the weapon, the calculation of the angular positions of targets being performed in the reference frame of the barrel of the weapon by the implementation of a beacon locator radio technology referred to as angle of arrival, said beacons being worn by the target;
- determining (702, 703, 704, 705, 706) if at least one object present on an image viewed by the weapon is hit by the ammunition, and if yes characterize said at least one object by information concerning the type of object and its position; and
- combining (710) the angular position information of targets and the information concerning the type of object and its position, to identify the target hit by the ammunition and determine the point of impact on the target.

10. The method according to the preceding claim further comprising a step for generating (711) a shooting report and calculating the attrition due to the position of the point of impact of the ammunition on the target.

Figure 1

FIG.1

Figure 2

FIG.2

Figure 3

FIG.3

Figure 4

Id-Balise 1

ANT1

Φ1=-10°

Φ2<1°

Id-Balise 2

ANT2

Φ3=+30°

Id-Balise 3

FIG.4

Figure 5

ANT2

ANT1

Φ=Azimut

λ=Elévation

Balise

ANT3

FIG.5

EP 4 390 298 B1

Figure 6

FIG.6

14

Figure 7

701 Détection du départ d'une munition

707 Détection de la position relative des balises par rapport à l'arme

708 Stockage des positions, identifiant et horodatage pour les balises se trouvant « devant » le tireur

709

700

702 Données Image

703 Détection des objets sur l'ensemble des caméras, calcul de pose

704 Calcul balistique de la position touchée dans l'image

705 Détection d'un objet à la position touchée

NON → Fin

OUI

706 Utilisation du type de cible et de sa géométrie pour renvoyer la position des différentes balises potentielles portées par la cible

710 Détermination de la (des) balise(s) appartenant à la cible touchée et de ou des identifiants de la cible

711 Construction du rapport de tir, calcul de l'attrition (Disponible immédiatement après le tir)

712 Envoi du rapport par réseaux sans fil

A la direction d'exercice

714 Retour instructeur

Au participant cible

713 - Avertissement - Désactivation de l'âme de la cible

FIG.7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20213727738 A1
- EP 2456009 A1
- CN 112969139 A
- FR 3087528